# EUROPÄISCHE PATENTSCHRIFT

(11) **EP 3 201 481 B1**
(45) Veröffentlichungstag und Bekanntmachung des Hinweises auf die Patenterteilung: **26.09.2018**
(21) Anmeldenummer: 15775156.1
(22) Anmeldetag: 29.09.2015
(51) Int. Cl.: F16B 7/18

(54) **ROHRVERBINDUNGSANORDNUNG UND ROHRVERBINDUNG ZWEIER ROHRE**
PIPE CONNECTION ARRANGEMENT AND PIPE CONNECTION OF TWO PIPES
DISPOSITIF DE RACCORDEMENT DE TUBES ET RACCORDEMENT DE DEUX TUBES

(30) Priorität: 29.09.2014 DE 102014014435
(43) Veröffentlichungstag der Anmeldung: 09.08.2017
(73) Patentinhaber: Touratech AG, 78078 Niedereschach (DE)
(72) Erfinder: SCHANZ, Jochen, 78078 Niedereschach (DE); SCHWARZ, Herbert, 78078 Niedereschach (DE)
(74) Vertreter: Klang, Alexander H.
(86) Internationale Anmeldenummer: PCT/EP2015/072431
(87) Internationale Veröffentlichungsnummer: WO 2016/050773

(56) Entgegenhaltungen:
- EP-A1- 2 429 865
- DE-C- 611 970
- GB-A- 1 373 571
- US-A1- 2013 092 407

## Beschreibung

Die vorliegende Erfindung betrifft eine Rohrverbindungsanordnung sowie eine Rohrverbindung zweier Rohre, insbesondere für die Verbindung von Schutzbügeln für Motorräder oder Schneemobile untereinander oder mit der Karosserie beziehungsweise dem Rahmen des entsprechenden Fahrzeugs.

In der Technik sind unterschiedlichste Rohrverbindungsanordnungen für die Befestigung von Schutzbügeln für Motorräder oder Schneemobile untereinander oder mit der Karosserie beziehungsweise dem Rahmen des entsprechenden Fahrzeugs bekannt. Bei einer bekannten Rohrverbindungsanordnung wird an das Ende eines Vollrohrs ein Befestigungsansatz angeschweißt, der einen ersten Abschnitt besitzt, der sich in das Vollrohr hineinerstreckt, sowie einen zweiten Abschnitt, der eine sich weg von dem Rohr erstreckende Befestigungslasche aufweist. Solche Befestigungsansätze sind üblicherweise aus Metall und als Vollgussteile ausgeführt. Sie sind daher teuer in der Herstellung und müssen darüber hinaus aufwendig durch Schweißen an dem Rohr befestigt werden, was deren Montage erschwert. Eine solche Rohrverbindungsanordnung ist beispielsweise aus der EP 2 429 865 B1 bekannt. Ferner ist aus der US 2013 092 407 A1 eine Rohrverbindungsanordnung gemäß dem Oberbegriff des Anspruchs 1 bekannt.

Der Erfindung liegt daher die Aufgabe zugrunde, eine Rohrverbindungsanordnung, insbesondere für Schutzbügel von Motorrädern oder Schneemobilen vorzusehen, welche die Anbindung eines Rohrs an ein Gegenlager oder die Verbindung zweier Rohre erleichtert.

Erfindungsgemäß ist hierfür eine Rohrverbindungsanordnung nach Anspruch 1 oder 13 bzw. eine Rohrverbindung nach Anspruch 11 vorgesehen. Weitere Ausgestaltungen ergeben sich unter Anderem aus den Unteransprüchen.

Gemäß einer Ausführung ist eine Rohrverbindungsanordnung vorgesehen, die ein speziell geformtes Rohr und einen hieran angepassten Einsatz aufweist. Das Rohr weist wenigstens einen Ausschnitt auf, der so ausgebildet ist, dass angrenzend an einen Vollrohrabschnitt des Rohrs ein Teilrohrabschnitt, wobei in dem Teilrohrabschnitt wenigstens eine Durchführung ausgebildet ist. Der Einsatz besitzt einen ersten Abschnitt, der zur Aufnahme im Vollrohrabschnitt des Rohrs geeignet ist und einen an den Innenumfang des Vollrohrabschnitts angepassten Außenumfang aufweist, sowie einen zweiten Abschnitt, der zur Aufnahme im Teilrohrabschnitt des Rohrs geeignet ist und der eine an die Innenkontur des Teilrohrabschnitts angepasste gewölbte Kontur und eine entgegensetzte Anlageseite aufweist, wobei in dem zweiten Abschnitt wenigstens eine Durchführung ausgebildet ist. Im eingesetzten Zustand des Einsatzes wiest die Anlageseite des zweiten Abschnitts zum Ausschnitt des Teilrohrs und die Durchführungen im Teilrohrabschnitt und im zweiten Abschnitt des Einsatzes sind zueinander ausgerichtet, um das Hindurchführen eines Befestigungselements, zu ermöglichen. Eine entsprechende Rohrverbindungsanordnung ist einerseits leicht herzustellen und erleichtert eine Montage eines Rohres an einem zweiten Rohr oder einer flachen Befestigungsfläche. Insbesondere muss der Einsatz nicht aufwendig mit dem Rohr verbunden werden, da seine Position durch ein Befestigungselement, das sich durch die Durchführungen erstreckt, sichergestellt werden kann. Der Einsatz bildet eine Anlagefläche und kann beim Festziehen eines Befestigungselements ein Verformen, insbesondere ein Aufspreizen des Teilrohrabschnitts verhindern.

Vorzugsweise weist der Einsatz an einem freien Ende des zweiten Abschnitts und/oder am Ende des ersten Abschnitts, der benachbart zum zweiten Abschnitt liegt, einen Anlageflansch zur Anlage gegen eine Stirnseitenkante des Teilrohrabschnitts aufweist. Hierdurch kann in einfacher Weise die Einstecktiefe des Einsatzes in das Rohr begrenzt werden, um eine Positionierung und Ausrichtung der Durchführungen zu erleichtern. Dabei weisen der Anlageflansch und die entsprechende Stirnseitenkante wenigstens eine komplementäre Ausrichtungskontur auf, um auch eine Ausrichtung in Drehrichtung des Rohrs zu gewährleisten.

Bei einer Ausführungsform sind wenigstens zwei Durchführungen im Teilrohrabschnitt und im zweiten Abschnitt des Einsatzes vorgesehen, um eine drehfeste Verbindung zu ermöglichen, die eine Drehung um eine senkrecht zur Anlagefläche des Einsatzes stehende Achse verhindert.

Bevorzugt ist der Einsatz ein Kunststoff-Gussteil, insbesondere ein Spritz- oder Druckgussteil, das kostengünstig herstellbar ist und auch die erforderliche Festigkeit aufweist. Dabei ist vorteilhaft, dass der Einsatz im montierten Zustand im Wesentlichen durch den Vollrohrabschnitt und durch den Teilrohrabschnitt abgedeckt und gegenüber mechanischen Einflüssen wenigsten teilweise geschützt ist.

Gemäß einem Aspekt weist die Rohrverbindungsanordnung ferner wenigstens ein Unterlegteil aufweist, dass eine an die Außenkontur des Teilrohrabschnitts angepasste erste Seite und eine entgegengesetzte zweite Seite Aufweist, wobei das Unterlegteil wenigstens eine Durchführung für ein Befestigungselement aufweist, und wobei die zweite Seite im Bereich der Durchführung eine flache Anlagefläche für ein Befestigungselement aufweist. Hierdurch kann eine gute Befestigung beispielsweise über eine Schraube oder eine Niete sichergestellt werden, die wenn sie gegen eine gewölbte Fläche wirken problematisch sein kann.

Bei einer Ausführungsform der Rohrverbindungsanordnung ist der Ausschnitt zur Bildung des Teilrohrabschnitts derart am Ende des Rohrs ausgebildet, dass der Teilrohrabschnitt über den Vollrohrabschnitt hinweg vorsteht, um eine Endbefestigung des entsprechenden Rohrs zu ermöglichen. Um eine Drehfeste Verbindung des Rohrendes zu ermöglichen kann eine Stirnseite des Vollrohrabschnitts und/oder des Teilrohrabschnitts eine Verzahnungsstruktur aufweisen. Für eine Übertragung von Zugkräften in Längsrichtung des Rohres kann wenigstens eine radial weisende Längskante des Teilrohrabschnitts eine Verzahnungsstruktur aufweisen. Dabei können die zuvor genannten Verzahnungsstrukturen zum Beispiel eine der folgenden Formen beschreiben: Sägezahn, Rechteck, Dreieck und Welle.

Bei einer Ausführungsform der Rohrverbindungsanordnung liegt der Ausschnitt zur Bildung des Teilrohrabschnitts zwischen zwei Vollrohrabschnitten, um beabstandet vom Ende eines Rohres eine Anbindung zu ermöglichen. Bei dieser Ausführungsform weist der Einsatz einen Dritten Abschnitt auf, der zur Aufnahme im Vollrohrabschnitt des Rohrs geeignet ist und eine an den Innenumfang des Vollrohrabschnitts angepasste Außenkontur aufweist, und wobei der zweite Abschnitt des Einsatzes zwischen dem ersten und dem dritten Abschnitt liegt.

Die Anlageseite des Einsatzes kann flach ausgebildet sein oder auch eine Verzahnungsstruktur aufweisen. Eine flache Anlageseite ermöglicht eine besonders einfache Montage in unterschiedlichen Positionen während eine Verzahnungsstruktur in der Regel zu eine festgelegten Positionierung führt und auch über die Einsätze ein bessere Kraftübertragung ermöglicht.

Bevorzugt bildet der Teilrohrabschnitt im Wesentlichen einen Halbrohrabschnitt, wobei im Wesentlichen eine maximale Winkelabweichung von 10°, bevorzugt 5° umfassen soll.

Bei der Rohrverbindung zweier Rohre, ist für jedes Rohr eine Rohrverbindungsanordnung des obigen Typs vorgesehen, wobei die Teilrohrabschnitte der Rohre mit eingesetzten Einsätzen derart überlappend angeordnet sind, dass die Anlageseiten der zweiten Abschnitte der Einsätze einander kontaktieren, und wobei wenigstens ein Befestigungselement vorgesehen ist, dass sich durch die Durchführungen in beiden Teilrohrabschnitten und den Einsätzen erstrecken, um die Rohre aneinander zu befestigen. Eine solche Rohverbindung lässt sich einfach und kostengünstig herstellen.

Bei einer solchen Rohrverbindung können die Rohrverbindungsanordnungen für jedes der Rohre jeweils eine Verzahnungsstruktur aufweisen, wobei die Verzahnungsstrukturen der Rohrverbindungsanordnungen zueinander komplementär sind, um Zug und oder Drehkräfte zwischen den Rohrelementen übertragen zu können. Die Verzahnungsstrukturen können in wenigstens einem der Folgenden ausgebildet sein: einer Stirnseite des Vollrohrabschnitts, einer Stirnseite des Teilrohrabschnitts, einer radial weisende Längskante des Teilrohrabschnitts und der Anlageseite des Einsatzes.

Eine alternative Rohrverbindungsanordnung für zwei Rohre weist für jedes der Rohre an wenigstens einem Befestigungsende einen Ausschnitt auf, der so ausgebildet ist, dass angrenzend an einen Vollrohrabschnitt des jeweiligen Rohrs ein Teilrohrabschnitt ausgebildet ist, der mit dem Teilrohrabschnitt des anderen Rohrs überlappend angeordnet werden kann, wobei in jedem Teilrohrabschnitt wenigstens eine Durchführung ausgebildet ist. Ferner weist die alternative Rohrverbindungsanordnung einen Einsatz mit einem an den Innenumfang der Vollrohrabschnitte angepassten Außenumfang und einer Länge aufweist, die Länger ist als die eines jeweiligen Teilrohrabschnitts. Dabei ist die Länge so lang, dass die entgegengesetzten Enden des Einsatzes bei einer überlappenden Anordnung der Teilrohrabschnitte der Rohre in beiden Vollrohrabschnitten der Rohre aufnehmbar sind. Der Einsatz weist auch wenigstens eine Durchführung auf, die mit den Durchführungen in den Teilrohrabschnitten ausrichtbar ist, wenn die entgegengesetzten Enden des Einsatzes in den Vollrohrabschnitten der Rohre aufgenommen sind, um das Hindurchführen eines Befestigungselementes durch die Teilrohrabschnitte und den Einsatz zu ermöglichen. Auch eine solche Rohrverbindungsanordnung lässt sich einfach herstellen, indem die Rohre im Wesentlichen einfach in einer bestimmten Ausrichtung auf den Einsatz aufgesteckt und dann über entsprechende Befestigungselemente befestigt werden. Dabei überlappen sich die Teilrohrabschnitte, sodass zwischen den Rohren wirkende Zugkräfte direkt in die Rohre geleitet werden können.

Bevorzugt weist der Einsatz zwischen seinen entgegengesetzten Enden wenigstens einen Anlageflansch zur Anlage gegen eine Stirnseitenkante eines Teilrohrabschnitts auf, um die Einstecktiefe des Einsatzes zu begrenzen. Dabei weisen der Anlageflansch und die Stirnseitenkante bevorzugt wenigstens eine komplementäre Ausrichtungskontur auf, um eine Ausrichtung in Umfangsrichtung des Rohrs vornehmen zu können.

Die Erfindung wird nachfolgend unter Bezugnahme auf die Zeichnungen näher erläutert; in den Zeichnungen zeigt:
- Fig. 1: eine perspektivische Anordnung einer Ausführungsform einer Rohrverbindung zweier Rohre;
- Fig. 2: eine schematische Seitenansicht der Rohrverbindung gemäß Figur 1 im verbundenen Zustand;
- Fig. 3: eine Schnitteansicht entlang der Linie III - III in Fig. 2;
- Fig. 4: eine schematische perspektivische Ansicht von oben auf die Rohrverbindung gemäß Fig. 2;
- Fig. 5: eine schematische Seitenansicht eines Einsatzes einer Rohrverbindungsanordnung;
- Fig. 6: eine schematische perspektivische Ansicht von oben auf den Einsatz gemäß Fig. 5;
- Fig. 7: eine schematische perspektivische Ansicht von unten auf den Einsatz gemäß Fig. 5;
- Fig. 8: eine Draufsicht und eine Seitenansicht eines Unterlegelements;
- Fig. 9: eine schematische Seitenansicht eines alternativen Einsatzes für eine Rohrverbindung für zwei Rohre;
- Fig. 10: unterschiedliche Ansichten einer erfindungsgemäßen Rohrverbindungsanordnung zur Befestigung an einem nicht rohrförmigen Gegenlager, wobei Fig. 10a eine Seitenansicht, Fig. 10b eine Schnittansicht entlang der Linie b-b in Fig 10a, Fig. 10c eine Draufsicht und Fig. 10d eine perspektivische Explosionsansicht zeigen;
- Figs. 11 bis 18: unterschiedliche Ansichten erfindungsgemäßer Rohrverbindungsanordnungen für zwei Rohre, wobei in den Figuren jeweils (a) eine Seitenansicht, (b) eine Schnittansicht entlang der Linie (b)-(b) in (a), (c) eine Draufsicht und (d) eine perspektivische Explosionsansicht zeigen;
- Figs. 19 bis 21: unterschiedliche Ansichten erfindungsgemäßer Roverbindungsanordnungen für zwei Rohre, die unter einem Winkel zueinander angeordnet werden, wobei in den Figuren jeweils (a) eine Seitenansicht, (b) eine Draufsicht und (c) eine perspektivische Explosionsansicht zeigen.

Die in der nachfolgenden Beschreibung verwendeten relativen Begriffe, wie zum Beispiel links, rechts, über und unter beziehen sich auf die Zeichnungen und sollen die Anmeldung in keiner Weise einschränken, auch wenn sie sich auf bevorzugte Anordnungen beziehen können. Die Formulierung im Wesentlichen soll bezogen auf Dimensionen wie Abstände, Durchmesser etc. Abweichungen von bis maximal 10% bevorzugt bis maximal 5% umfassen.

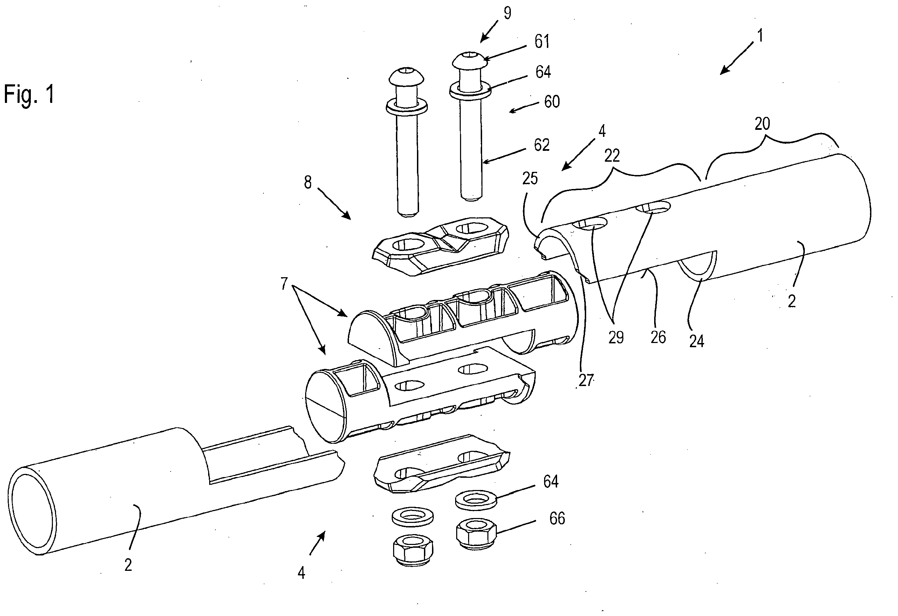

Eine erste Ausführungsform einer Rohrverbindung 1 für zwei Rohre 2, 2 wird im Nachfolgenden unter Bezugnahme auf die Figuren 1 bis 8 näher erläutert. Die Rohrverbindung 1 besteht im Wesentlichen aus zwei Rohrverbindungsanordnungen 4, die den gleichen Aufbau besitzen. Jede der Rohrverbindungsanordnungen 4 wird durch eines der Rohre 2, und einen Einsatz 7 gebildet. Darüber hinaus sind in Figur 1 Unterlegelemente 8 sowie Befestigungseinheiten 9 dargestellt.

Zur Vereinfachung der Beschreibung wird nachfolgend nur eine der Rohrverbindungsanordnungen 4 näher erläutert, da beide im Wesentlichen identisch sind.

Das Rohr 2 einer Rohrverbindungsanordnung 4 besitzt einen ersten Vollrohrabschnitt 20 sowie an seinem freien (Befestigungs-)Ende einen Teilrohrabschnitt 22. Der Vollrohrabschnitt 20 kann eine übliche Rohrform wie beispielsweise eine Kreisform oder auch eine ovale Form aufweisen. Bei der dargestellten Rohrverbindung sind die Rohre 2 und somit die Vollrohrabschnitte 20 jeweils kreisförmig. Der Vollrohrabschnitt 20 besitzt im Wesentlichen einen radial voll umlaufenden Rohrköper.

Der Teilrohrabschnitt 22 ist einteilig mit dem Vollrohrabschnitt 20 ausgebildet, und ist bevorzugt durch Vorsehen eines entsprechenden Ausschnitts an einem Ende eines Vollrohrabschnitts (20) ausgebildet. Dabei kann der Ausschnitt insbesondere durch Laserschneiden genau hergestellt werden. Der Ausschnitt ist dabei bevorzugt so ausgeführt, dass der Teilrohrabschnitt 22 im Wesentlichen ein Halbrohr bildet, das heißt, dass sich der Ausschnitt in Durchmesserrichtung über die Hälfte des Rohrs 2 erstreckt. Als Halbrohr umschreibt der Teilrohrabschnitt (22) somit einen Winkel von im Wesentlichen 180°, wobei im Wesentlichen Abweichungen bis 10° bevorzugt bis 5° umfassen soll. Hierbei werden sowohl am Ende des Vollrohrabschnittes 20 (am Übergang zum Teilrohrabschnitt 22) sowie am freien Ende des Teilrohrabschnitts 22 Stirnseitenkanten 24, 25 gebildet, die in einer Ansicht auf des entsprechende Ende des Rohrs jeweils im Wesentlichen die Form eines Halbrohrs beschreiben. Diese Stirnseitenkanten 24, 25 werden durch Längskanten 26 verbunden, die sich in Längsrichtung des Rohrs 2 erstrecken. Die Stirnseitenkante 25 am freien Ende des Teilrohrabschnitts 22 besitzt benachbart zu den Längskanten 26 jeweils eine Führungsschräge 27, deren Funktion nachfolgend noch näher erläutert wird.

Der Teilrohrabschnitt 22 besitzt ferner zwei Durchführöffnungen 29, die am höchsten Punkt des Teilrohrabschnitts (in Radialrichtung mittig zwischen den Längskanten 26) angeordnet und in Längsrichtung des Rohrs 2 beabstandet sind. Obwohl in den Figuren jeweils zwei dieser Durchführöffnungen 29 dargestellt sind, sei bemerkt dass mehr oder auch weniger Durchführöffnungen vorgesehen sein können.

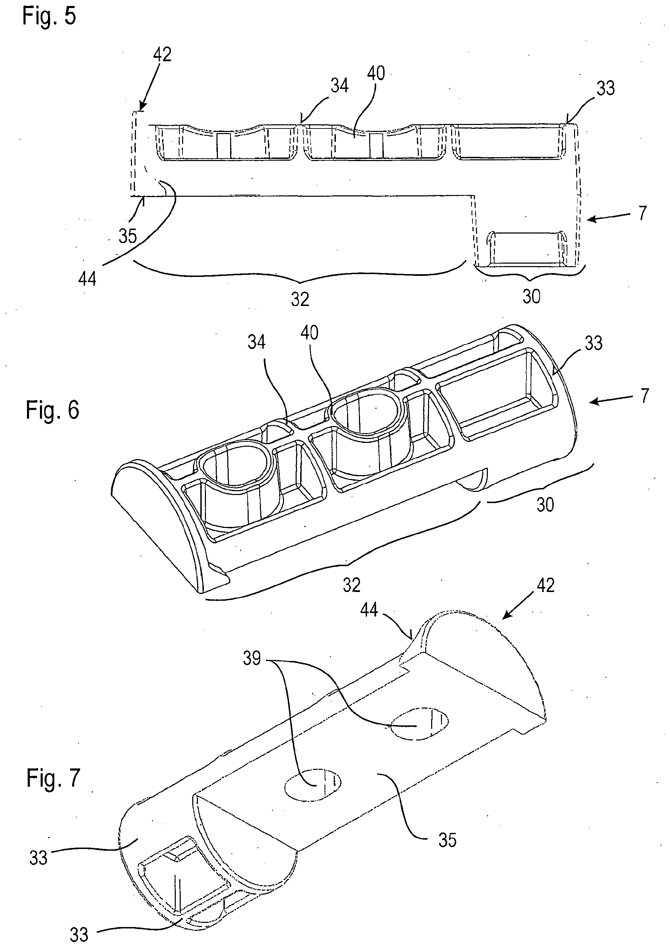

Der Einsatz 7 einer entsprechenden Rohrverbindungsanordnung 4 wird insbesondere unter Bezugnahme auf die Figuren 5 bis 7 näher erläutert, welche unterschiedliche Ansichten des Einsatzes 7 zeigen. Der Einsatz 7 ist bevorzugt als Kunststoff-Gussteil insbesondere als Spritz- oder Druckgussteil ausgebildet. Der Einsatz 7 besitzt einen ersten Abschnitt 30, sowie einen zweiten Abschnitt 32.

Der erste Abschnitt 30 ist an die Innenkontur des Vollrohrabschnitts 20 des Rohrs 2 angepasst, und so dimensioniert, dass er engpassend in den Vollrohrabschnitt 20 aufnehmbar ist. Bei einem kreisförmigen Rohr 2, wie es in den Figuren dargestellt ist, besitzt der Einsatz 7 im Bereich des Abschnitts 30 somit eine im Wesentlichen kreisförmige Umfangskontur 33, wobei herstellungsbedingt größere Freiräume bzw. Aussparungen entstehen, wie insbesondere in den perspektivischen Ansichten gemäß Fig. 6 und 7 zu erkennen ist. Insgesamt sind jedoch Kontaktflächen entweder großflächiger oder in Form von Stegen vorgesehen, welche insgesamt eine kreisförmige Umfangskontur 33 (oder eine andere an die Innenkontur des Rohrs 2 angepasste) definieren.

Der Abschnitt 32 des Einsatzes 7 besitzt eine an die Innenkontur des Teilrohrabschnitts 22 angepasste gewölbte Kontur 34, sowie eine flache Anlageseite 35. Die gewölbte Kontur 34 kann wiederum herstellungsbedingt Vertiefungen und Stege aufweisen, die wenigstens punktuell eine entsprechende Kontur 34 vorsehen. Dabei ist Kontur 34 so ausgebildet, dass sie sich eng an die Innenkontur des Teilrohrabschnitts 22 des Rohrs 2 anlegen kann. Wenn dies der Fall ist, bilden die Längskanten 26 des Teilrohrabschnitts 22 und die flache Anlageseite 35 des Abschnitts 32 des Einsatzes 7 eine im Wesentlichen ebene Anlagefläche.

In der flachen Anlageseite 35 sind zwei Durchführöffnungen 39 vorgesehen, welche sich in Richtung der Gewölbten Kontur erstrecken und dabei von entsprechenden Stegen 40 umgeben sind, wie am besten in Figur 6 zu erkennen ist. Die Durchführöffnungen 39 sind in Längserstreckung des Einsatzes 7 beabstandet, und zwar mit im Wesentlichen denselben Abstand wie die Durchführöffnungen 29 im Teilrohrabschnitt 22 des Rohrs 2. Darüber hinaus besitzen die Durchführöffnungen 39 und 29 im Wesentlichen dieselben Umfangsabmessungen und sie sind zueinander ausgerichtet, wenn der Einsatz 7 in dem Rohr 2 aufgenommen ist, wie nachfolgend noch näher beschrieben wird.

Am freien Ende des zweiten Abschnitts 32 weist der Einsatz 7 ferner einen optionalen Führungsflansch 42 auf, der über die Kontur 34 des zweiten Abschnitts 32 vorragt. Der Führungsflansch 42 ist so bemessen, dass er, wenn der Einsatz 7 in das Rohr 2 eingesetzt ist, die Stirnseitenkante 25 des Teilrohrabschnitts 22 kontaktiert. In Umfangsrichtung fluchtet der Führungsflansch 42 Im Wesentlichen mit der Außenfläche des Teilrohrabschnitts 22 des Rohrs 2. Für eine genaue Positionierung des Einsatzes in einer Umfangsrichtung weist der Flansch 42 den Führungsschrägen 27 entsprechende Führungsschrägen 44 auf. Durch den Führungsflansch 42 kann der Einsatz 7 genau in dem Rohr 2 positioniert werden, wobei insbesondere die Durchführöffnungen 29 mit den entsprechenden Durchführöffnungen 39 ausgerichtet werden.

Statt den Führungsflansch 42 im Bereich des freien Endes des zweiten Abschnitts 32 des Einsatzes 7 vorzusehen, wäre es auch denkbar einen entsprechenden Führungsflansch im Bereich des Übergangs zwischen erstem und zweitem Abschnitt des Einsatzes 7 vorzusehen. Ein entsprechender Flansch könnte dann die Stirnseitenkante 24 des Vollrohrabschnitts 20 kontaktieren. Auch hier könnten entsprechende Ausrichtschrägen oder sonstige Elemente vorgesehen sein, um eine ordnungsgemäße Positionierung des Einsatzes 7 in Längs- und Umfangsrichtung des Rohrs 2 vorzusehen. Statt des Führungsflansches 42 mit seiner Führungsschräge 44 und der entsprechenden Führungsschräge 27 am Teilrohrabschnitt 22 ist es auch denkbar andere komplementäre Führungen vorzusehen, die eine ordnungsgemäße Positionierung zwischen Rohr 2 und Einsatz 7 vorzusehen. Hierbei ist insbesondere eine Ausrichtung der entsprechenden Durchführöffnungen 29 und 39 vorteilhaft.

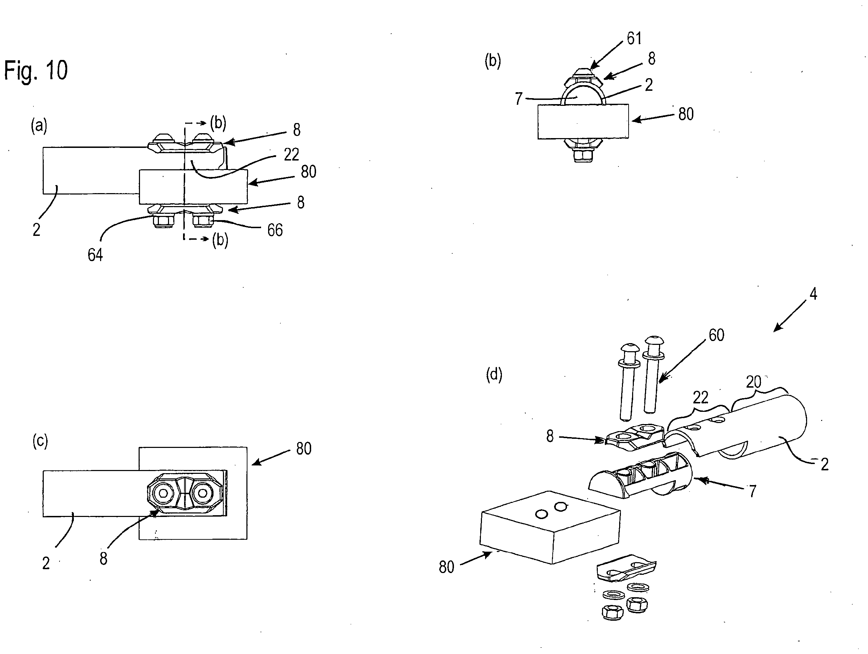

Das speziell geformte Rohr 2 mit dem Teilrohrabschnitt (22) und der Einsatz 7 bilden gemeinsam eine vollständige Befestigungsanordnung 4, welche die Befestigung des Rohrs 2 an einem flachen Gegenlager (unter Bezugnahme entsprechender Befestigungselemente 9) ermöglicht, wie der Fachmann erkennen wird. Als Flaches Gegenlager kann hier eine entsprechende zweite Befestigungsanordnung (4) dienen, um zwei Rohre miteinander zu verbinden, wie in Fig. 1 gezeigt ist oder auch ein anderes beliebiges Gegenlager 80 mit einer flachen Fläche, wie in Fig. 10 angedeutet. Ein solches anderes Gegenlager kann zum Beispiel ein Karosserieteil eines Motorrad oder Schneemobils oder auch ein anderes Teil sein. Als zusätzliches, optionales Element weist die Befestigungsanordnung 4 gemäß den Figuren noch ein Unterlegelement 8 auf.

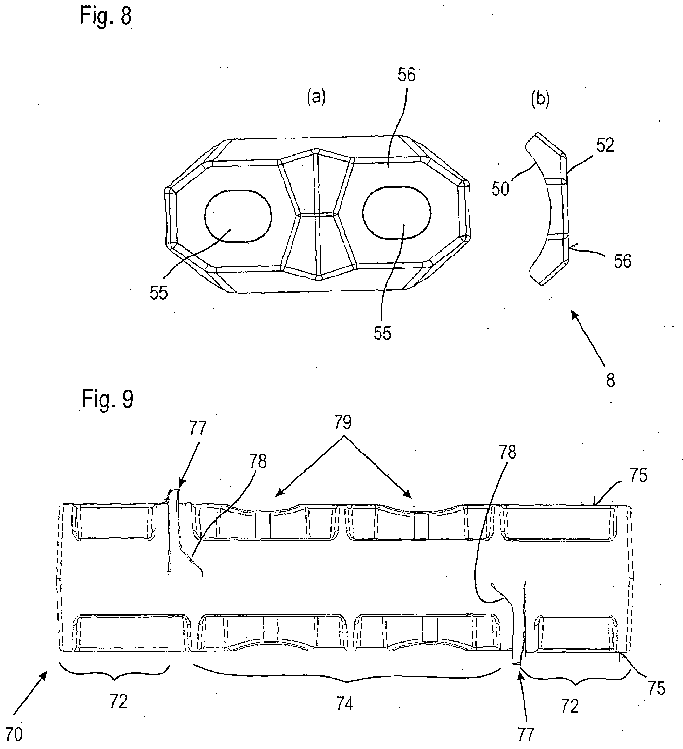

Dieses Unterlegelement 8 ist bevorzugt wiederum als Kunststoff-Gussteil insbesondere Spritz- oder Druckgussteil ausgeführt und wird nachfolgend unter Bezugnahme auf die Figuren 8 A und B näher erläutert. Dabei zeigt Figur 8 eine Draufsicht auf das Unterlegelement und Figur B eine Stirnseitenansicht. Wie in der Stirnseitenansicht zu erkennen ist, besitzt das Unterlegelement 8 eine gewölbte Seite 50 sowie eine wenigstens teilweise flache Oberseite 52. Die gewölbte Seite 50 ist an einer Außenkontur des Teilrohrabschnitts 22 des Rohrs 2 angepasst. Hierdurch kann die gekrümmte Seite 50 engpassend an den Teilrohrabschnitt 22 anliegen.

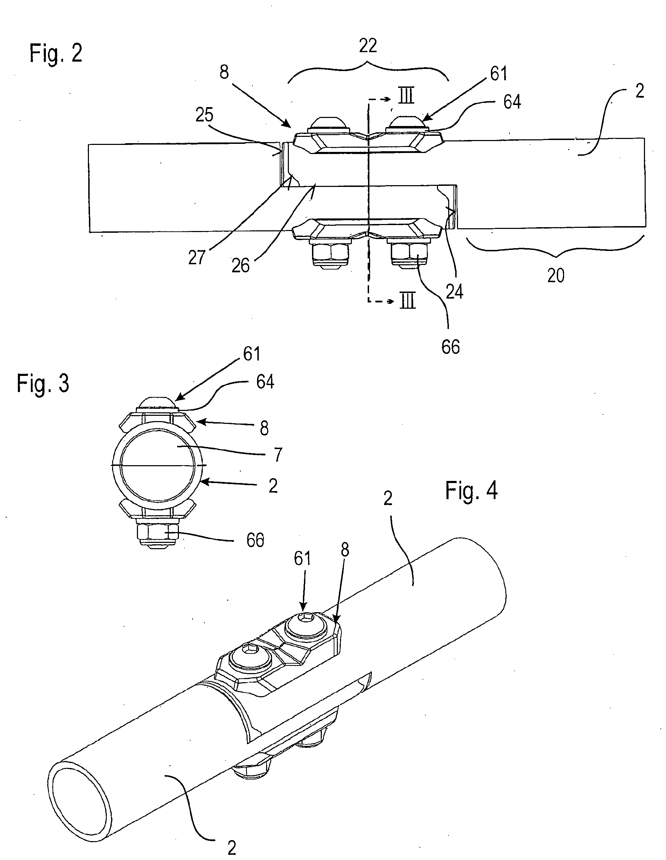

In dem Unterlegelement 8 sind zwei Durchführöffnungen 55 ausgebildet, die hinsichtlich ihrer Umfangsform und ihres Abstands im Wesentlichen der Umfangsform und dem Abstand der Durchführöffnungen 29 im Teilrohrabschnitt 22 (und somit den Durchführöffnungen 39 im Einsatz 7) entsprechen. Die flache Seite 52 sieht wenigstens die Durchführöffnungen 55 umgebend eine ebene Anlagefläche 56 vor. Insbesondere kann die Anlagefläche 56 für eine Unterlegscheibe, den Kopf eines Befestigungselementes und/oder eine Mutter als Anlage dienen, wie sich beispielsweise aus den Figuren 2 bis 4 ergibt.

Die in den Figuren dargestellten Befestigungseinheiten 9 bestehen jeweils aus einer Schraube 60 mit einem Schraubenkopf 61 und einem Gewindeschaft 62, wobei sich das Gewinde nicht über die gesamte Länge der Schraube 60 erstrecken muss, Unterlegscheiben 64 sowie einer Mutter 66, die bevorzugt als selbstsichernde Mutter 64 ausgeführt ist. Es sind aber auch andere Arten von Befestigungseinheiten denkbar, wie zum Beispiel Nieten, Splinte oder Stifte.

Nachfolgend wird nunmehr die Herstellung einer Verbindung zwischen den Rohrenden zweier Rohre 2 näher erläutert. Die Rohre 2 besitzen jeweils den oben beschriebenen Aufbau mit einem Vollrohrabschnitt 20 und entsprechendem Teilrohrabschnitt 22. In die Rohre 2 ist jeweils ein Einsatz 7 des oben beschriebenen Typs derart angeordnet, dass die Längskanten 26 der jeweiligen Teilrohrabschnitte 22 und die geraden Seiten 35 der Einsätze 7 eine ebene Anlagefläche bilden. Die Teilrohrabschnitte 22 sind jeweils als Halbrohrabschnitte ausgebildet. Die Teilrohrabschnitte 22 werden überlappend wie in Figur 2 gezeigt angeordnet, und zwar derart, dass die Durchführöffnungen 29 der jeweiligen Teilrohrabschnitte 22 und die Durchführöffnungen 35 in den jeweiligen Einsätzen 7 zueinander ausgerichtet sind. Anschließend können die Unterlegelemente 8 an den Teilrohrabschnitten 22 platziert werden und die Schrauben 60 durch die entsprechende Anordnung hindurch geführt werden. Die Schrauben 60 besitzen eine solche Länge, dass sie sich vollständig durch die entsprechenden Rohre 2 mit Einsätzen 7 und die Unterlegelemente 8 hindurcherstrecken, um das Aufschrauben der Mütter 66 zu ermöglichen. Hierbei können zwischen dem einen Unterlegelement 8 und den Schraubenköpfen 61 beziehungsweise zwischen dem anderen Unterlegelement 8 und den Müttern 66 zusätzlich Unterlegscheiben 64 angeordnet sein, wie in Figur 2 dargestellt ist. Eine entsprechende Anordnung der Rohre mit Rohrverbindungsanordnungen ermöglicht eine gerade Verbindung zweier Rohre miteinander. Dabei wird eine Verdrehung der Rohre zueinander durch die zwei Befestigungseinheiten 9 verhindert. Zwischen den Rohren auftretende Kräfte können über die Schrauben direkt auf die überlappenden Teilrohrabschnitte 22 wirken und müssen nicht unbedingt über den Einsatz 7 übertragen werden, wobei auch eine wenigstens Teilweise Kräfteübertragung über die Einsätze erfolgen kann. Der Einsatz gibt der Verbindungsanordnung trotzdem Stabilität und verhindert zum Beispiel unter anderem ein Aufspreizen der Teilrohrabschnitte 22 wenn die Schrauben 60 und Muttern 64 festgezogen werden. Darüber hinaus kann über den Einsatz 7 eine Positionierung der Rohre zueinander erreicht werden.

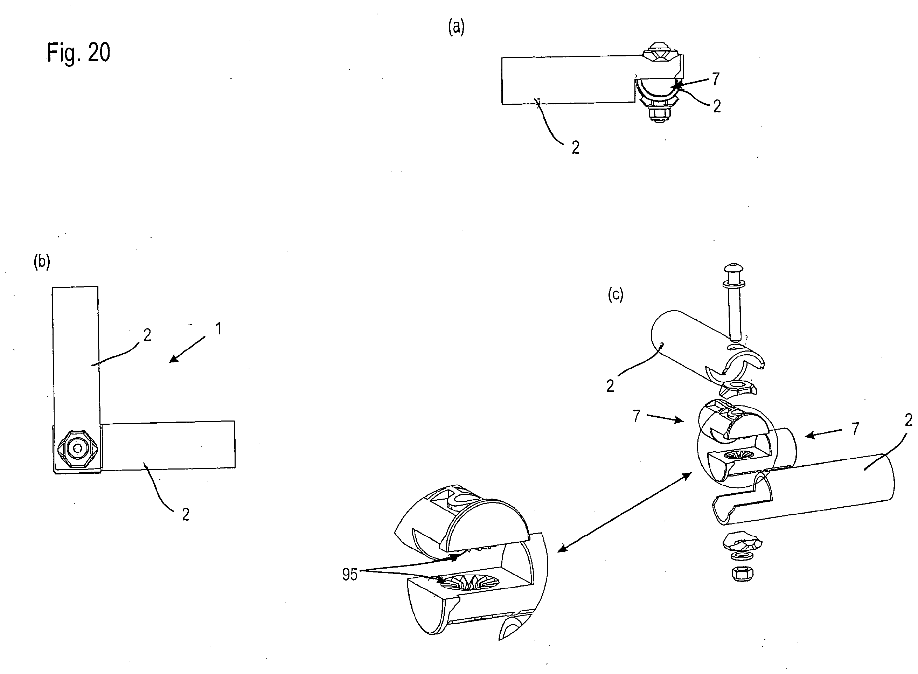

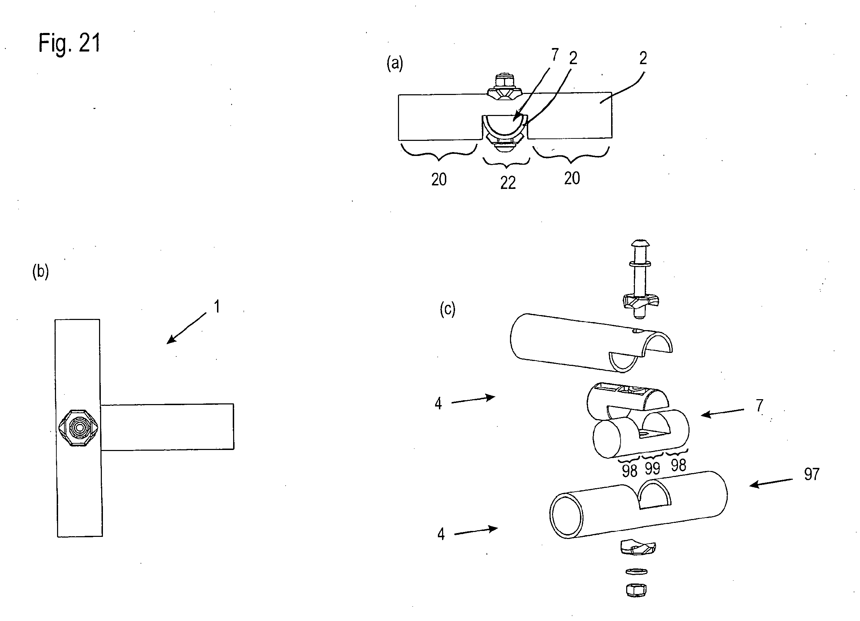

Wenn zwei Rohre 2 unter einem Winkel zueinander verbunden werden sollen, kann im Wesentlichen dieselbe Rohrverbindungsanordnung verwendet werden, wobei dann zum Beispiel nur eine Befestigungseinheit (beispielsweise bestehend aus Schraube 60 und Mutter 64) eingesetzt wird. Alternativ ist es auch möglich, dass für entsprechende Rohrverbindungen die jeweiligen Elemente Teilrohrabschnitt 22, Einsatz 7 und Unterlegelement 8 nur eine Durchführöffnung aufweisen. Eine solche Konfiguration ist beispielsweise in den Figuren 20 und 21 angedeutet, auf die nachfolgend noch näher eingegangen wird.

Eine Verbindungsanordnung 4 aus Rohr 2, Einsatz 7 und optionalem Unterlegelement 8 kann neben einer Verbindung mit einer entsprechenden weiteren Rohrverbindungsanordnung auch zur Verbindung mit einer anderen ebenen Fläche eingesetzt werden (siehe beispielsweise Fig. 10), wie beispielsweise einem Befestigungsflansch an einem Motorrad oder Schneemobil. Hierzu wird der Teilrohrabschnitt 22 mit Einsatz 7 in entsprechender Weise überlappend zu der entsprechenden Befestigungsfläche angeordnet und mit einem entsprechenden Befestigungselement befestigt. Hierbei ist es zum Beispiel auch möglich, dass zum Beispiel eine Schraube direkt in einen entsprechenden Befestigungsflansch geschraubt wird, d.h. sich nicht durch den Befestigungsflansch hindurch sonder nur in ihn hinein erstreckt.

Statt der hier dargestellten Schrauben ist es auch möglich zur Befestigung Nieten oder sonstige entsprechende Befestigungselemente mit einem Schaftelement, das sich durch die zu verbindende Elemente hindurch oder in diese hinein erstreckt, vorzusehen.

Figur 9 zeigt eine alternative Ausführungsform eines Einsatzes 70, der zur Verbindung zweier Rohre 2 des zuvor beschriebenen Typs anstelle der Einsätze 7 eingesetzt werden kann. Der Einsatz 70, kann wiederum als Kunststoff-Gussteil, insbesondere als Spritz- oder Druckgussteil ausgebildet sein.

Der Einsatz 70 besitzt an seinen entgegengesetzten Enden Endabschnitte 72 sowie einen dazwischen liegenden Mittelabschnitt 74. Die Endabschnitte 72 und der Mittelabschnitt besitzen jeweils einen an den Innenumfang der Vollrohrabschnitte der Rohre 2 angepasste Außenkontur 75. Zwischen den Endabschnitten 72 und dem Mittelabschnitt ist jeweils ein über die im Wesentlichen gleichmäßige Außenkontur vorstehender Führungsflansch 77 vorgesehen. Die Führungsflansche erstrecken sich jeweils nur um 180° in Umfangsrichtung des Einsatzes 70 und sie sind in Umfangsrichtung des Einsatzes 70 um 180° zueinander versetzt angeordnet. An ihrer zum Mittelabschnitt 74 weisenden Seite weisen die Flansche 77 jeweils eine Anlagefläche auf, die an ihren Enden (in Umfangsrichtung des Einsatzes 70) jeweils eine Schräge 78 aufweist. Die Flansche besitzen somit im Wesentlichen die gleiche Form wie die Flansche 42 an den Enden der Einsätze 7. Ferner weist der Einsatz 70 zwei Durchführöffnungen 79 auf, welche sich in der Darstellung gemäß Fig. 9 von oben nach unten durch den Einsatz 70 erstrecken. Die Durchführöffnungen 79 sind in Längserstreckung des Einsatzes 70 beabstandet, und zwar mit im Wesentlichen denselben Abstand wie die Durchführöffnungen 29 im Teilrohrabschnitt 22 der Rohre 2. Darüber hinaus besitzen die Durchführöffnungen 79 und 29 im Wesentlichen dieselben Umfangsabmessungen und sie sind zueinander ausgerichtet, wenn der Einsatz 70 in den Rohren 2 aufgenommen ist, wie nachfolgend noch näher beschrieben wird. Im Wesentlichen besitzt der Einsatz 70 somit die Form zweier an den geraden Seiten 35 verbundener Einsätze 7, ist aber einteilig ausgebildet.

Ein solcher Einsatz 70 kann mit seinen Endabschnitten 72 in die Vollrohrabschnitte 20 entsprechender Rohre 2 derart eingeführt werden, dass sich die Teilrohrabschnitte um Bereich des Mittelabschnitts 74 überlappen und die jeweiligen Durchführöffnungen 79 und 29 ausgerichtet sind. Hierbei kann eine entsprechende Ausrichtung über die Flansche 77, die mit Stirnseitenkanten 25 der Teilrohrabschnitte 22 in Eingriff kommen erreicht werden. Über entsprechende Befestigungseinheiten 9 kann nun eine entsprechende Verbindung komplettiert werden.

Auch bei einer solchen Anordnung können Kräfte über die Befestigungseinheiten 9 direkt zwischen den Rohren 2 übertragen werden. Der Einsatz 70 dient wiederum unter anderem dazu die Rohre 2 zueinander zu positionieren und ein Aufspreizen der Teilrohrabschnitte 22 während des Festziehens der Befestigungseinheiten zu verhindern oder zumindest zu begrenzen.

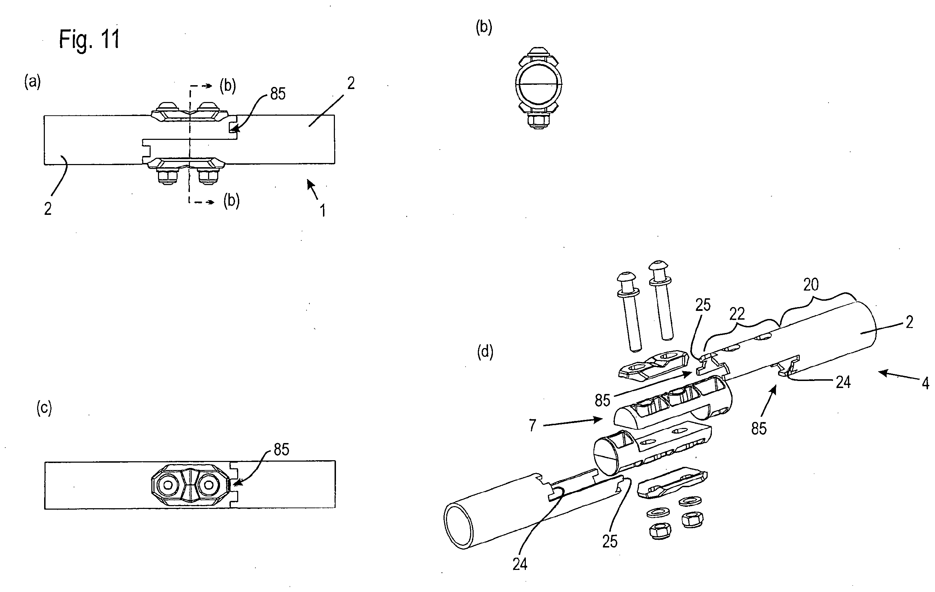

Die Figuren 11 bis 18 zeigen weitere Ausgestaltungen von Rohrverbindungen, wobei die Figuren jeweils unterschiedliche Ansichten der jeweiligen Ausführungsformen zeigen, wobei die Ansichten (a) jeweils eine Seitenansicht, (b) jeweils eine Schnittansicht entlang der Linie (b)-(b) in (a), (c) jeweils eine Draufsicht und (d) jeweils eine perspektivische Explosionsansicht zeigen. Die Ausgestaltungen gleichen im Wesentlichen den zuvor beschriebenen und daher werden einerseits dieselben Bezugszeichen verwendet und andererseits nur auf die Unterschiede eingegangen.

Bei der Ausgestaltung gemäß der Fig. 11, weist eine Rohrverbindung 1 zur Verbindung zweier Rohre 2 entsprechende Rohrverbindungsanordnungen 4 auf. Die Rohrverbindungsanordnungen 4 besitzen jeweils denselben Aufbau wie die zuerst beschriebenen. Die Rohre 2 weisen jedoch jeweils an den Stirnseitenkanten 24, 25 des Vollrohrabschnitts 20 und des Teilrohrabschnitts 22 eine Verzahnungsstruktur 85 auf, wobei die Verzahnungsstrukturen 85 der Rohre 2 komplementär zueinander ausgebildet sind. Die Verzahnungsstrukturen 85 sind durch rechteckige Zähne gebildet, sie könnten aber auch eine andere Form aufweisen. Die Verzahnungsstrukturen 85 ermöglichen in Umfangsrichtung eine sichere Positionierung der Rohre 2 zueinander und verhindern ein Verdrehen der Rohre 2 zueinander, beziehungsweise ermöglichen sie eine gute Übertragung von Drehkräften zwischen den jeweiligen Rohren 2.

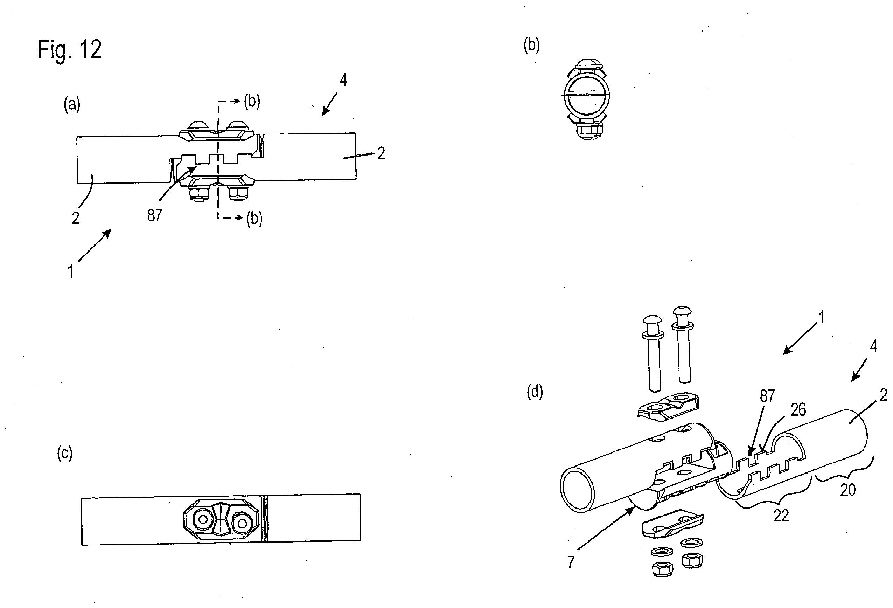

Auch die Ausgestaltung gemäß Fig. 12, weist eine Rohrverbindung 1 zur Verbindung zweier Rohre 2 mit Rohrverbindungsanordnungen 4 auf. Die Rohrverbindungsanordnungen 4 besitzen jeweils Wesentlichen denselben Aufbau wie die zuerst beschriebenen. Die Rohre 2 weisen jedoch jeweils an den die Stirnseitenkanten 24, 25 verbindenden Längskanten des Teilrohrabschnitts 22 eine Verzahnungsstruktur 87 auf, wobei die Verzahnungsstrukturen 87 der Rohre 2 komplementär zueinander ausgebildet sind. Die Verzahnungsstrukturen 87 sind durch rechteckige Zähne gebildet, sie könnten aber auch eine andere Form aufweisen. Die Verzahnungsstrukturen 87 ermöglichen in Längsrichtung eine sichere Positionierung der Rohre 2 zueinander. Ferner ermöglichen sie eine gute Übertragung von in Längsrichtung (axial) wirkenden Zugkräften zwischen den jeweiligen Rohren 2.

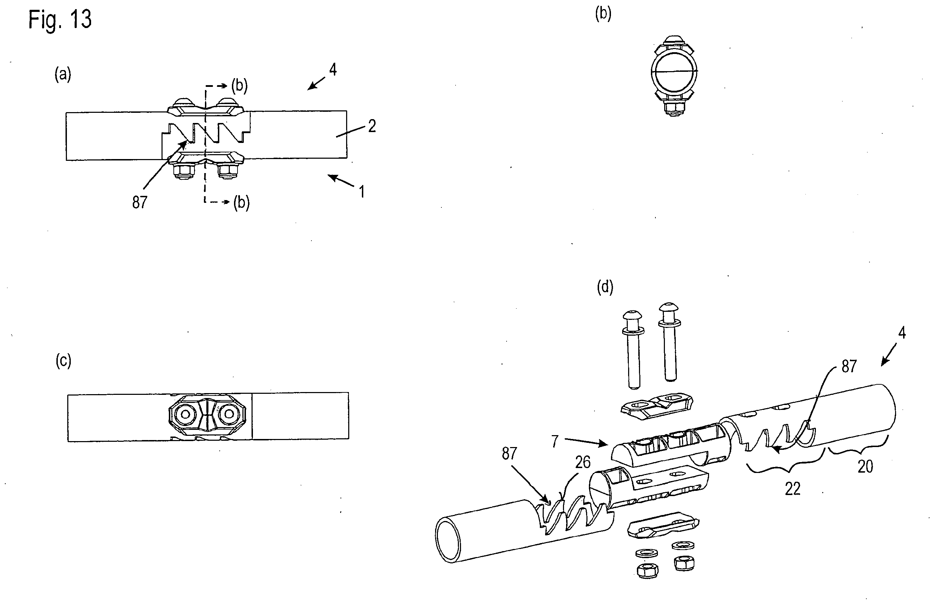

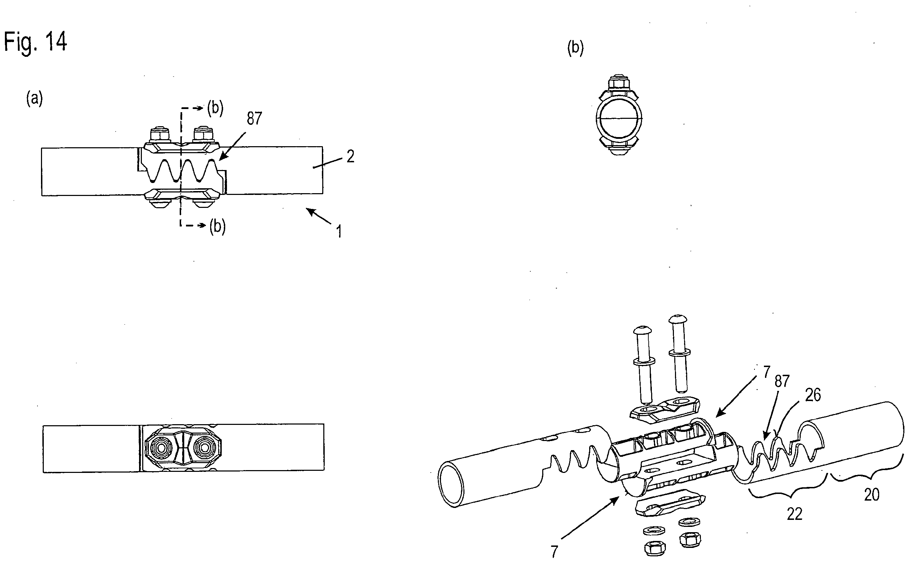

Die Ausgestaltungen gemäß Fig. 13 und 14 gleichen im Wesentlichen der Ausgestaltung gemäß Fig. 12, wobei jedoch die jeweiligen Verzahnungsstrukturen 87 eine andere Form aufweisen. So ist bei der Ausgestaltung gemäß Fig. 13 eine Sägezahnkonfiguration vorgesehen, während bei der Ausgestaltung gemäß Fig. 14 eine Wellenkonfiguration vorgesehen ist. Die Sägezahnkonfiguration kann neben dem oben genannten Vorteilen zusätzlich eine axiale Vorspannung der Elemente zueinander bewirken. Die Wellenkonfiguration kann ebenfalls eine axiale Vorspannung erreichen und ist besonders geeignet Toleranzen zwischen den Elementen auszugleichen.

Wie der Fachmann erkennen kann, können Verzahnungsstrukturen 85 und 87 auch kombiniert werden und es kann auch ein Einsatz 70 gemäß Fig. 9 verwendet werden.

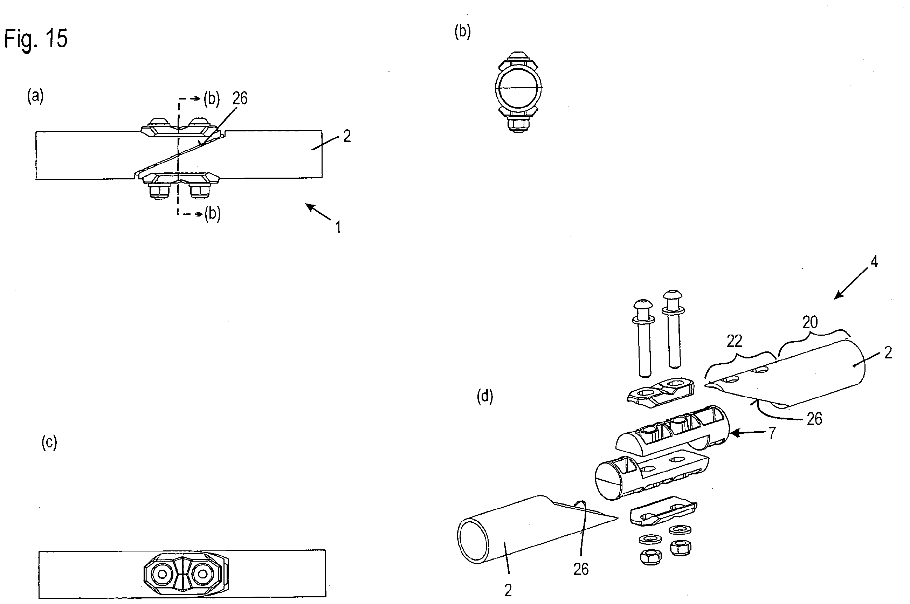

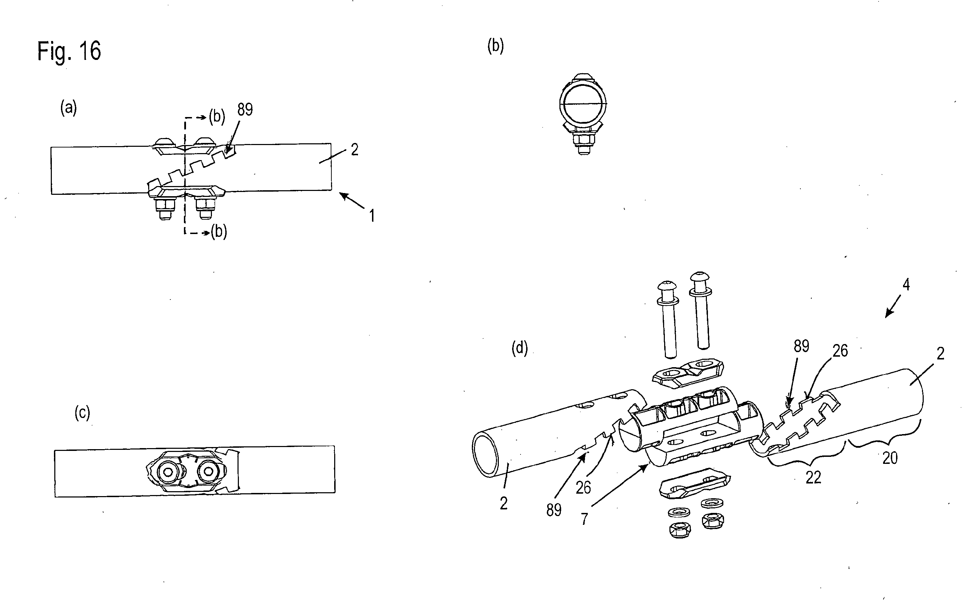

Bei der Ausgestaltung gemäß Fig. 15, weist eine Rohrverbindung 1 zur Verbindung zweier Rohre 2 wieder Rohrverbindungsanordnungen 4 auf. Die Rohrverbindungsanordnungen 4 besitzen jeweils im Wesentlichen denselben Aufbau wie die zuerst beschriebenen. Die Rohre 2 weisen jedoch im Bereich des Teilrohrabschnitts 22 jeweils schräge Längskanten 26 auf, sodass sich die Teilrohrabschnitte 26 zu ihrem freien Ende hin verjüngen. Die Ausgestaltung gemäß Fig. 16 ist ähnlich wie die gemäß Fig. 15, wobei an den schrägen Kanten 26 jedoch jeweils eine Verzahnungsstruktur 89 vorgesehen ist. Die Verzahnungsstrukturen 89 der beiden Rohre sind wieder komplementär zueinander. Auch bei dieser Konfiguration kann ein Einsatz 70 verwendet werden.

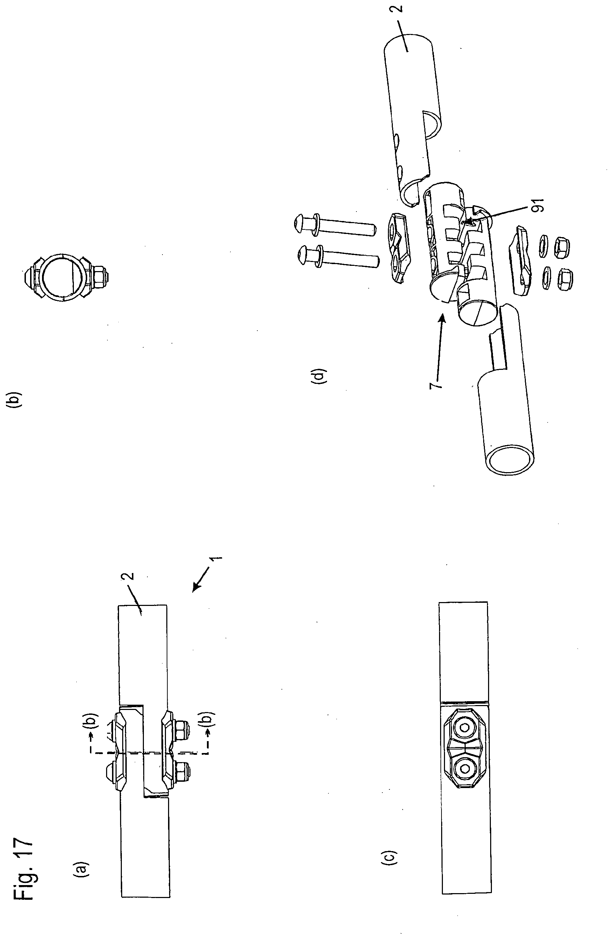

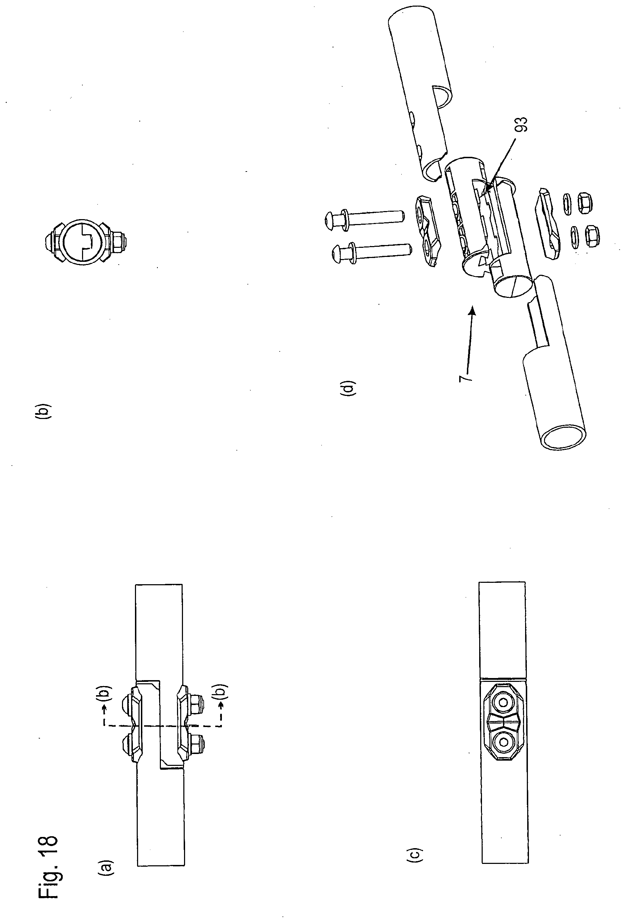

Die Ausgestaltungen gemäß Fig. 17 und Fig. 18, weisen jeweils wiederum eine Rohrverbindung 1 zur Verbindung zweier Rohre 2 mit Rohrverbindungsanordnungen 4 auf. Die Rohrverbindungsanordnungen 4 besitzen jeweils Wesentlichen denselben Aufbau wie die zuerst beschriebenen. Jedoch sind die Einsätze 7 so ausgestaltet, dass ihre Anlageflächen nicht flach sondern derart strukturiert sind, dass sie Verzahnungsstrukturen 91 bzw. 93 aufweisen, die zueinander komplementär sind. Bei der Ausführungsform gemäß Fig. 17 werden die Verzahnungsstrukturen 91 durch sich quer zur Längsrichtung erstreckende Rechtecknuten gebildet. Die dazwischen gebildeten Zähne weisen eine solche Länge auf, dass die Zähne eines Einsatzes 7 - beim Zusammenfügen zweier Einsätze 7 - in die Nuten des anderen Einsatzes eingreifen. Bei der Ausführungsform gemäß Fig. 18 wird die Verzahnungsstrukturen 93 durch eine Längsnut mit örtlichen Erweiterungen an einem Einsatz 7 und einem komplementären Vorsprung am anderen Einsatz 7 gebildet.

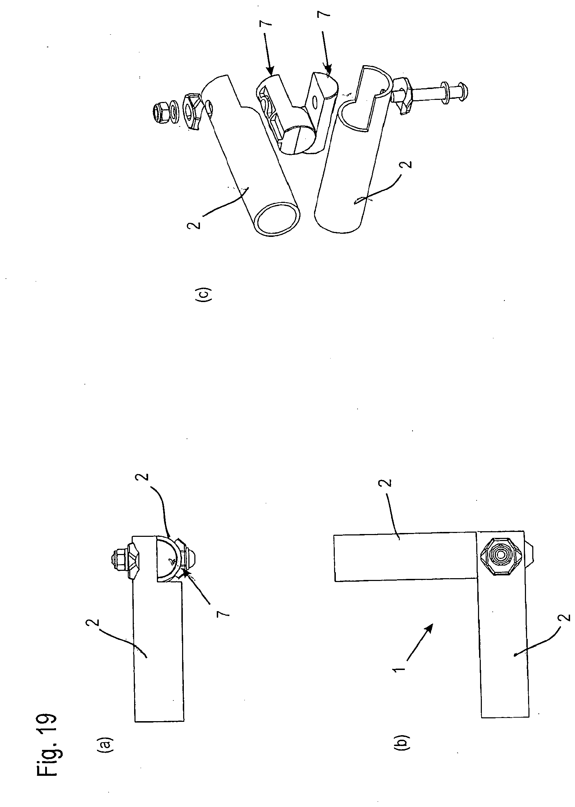

Die Figuren 19 bis 21 zeigen weitere Ausgestaltungen für Rohrverbindungen für zwei Rohre. Bei diesen Ausgestaltungen werden die Rohre jedoch unter einem Winkel zueinander angeordnet. In den Figuren zeigen jeweils (a) eine Seitenansicht, (b) eine Draufsicht und (c) eine perspektivische Explosionsansicht.

Bei der Ausgestaltung gemäß Fig. 19, weist eine Rohrverbindung 1 zur Verbindung zweier Rohre 2 mit Rohrverbindungsanordnungen 4 auf. Die Rohrverbindungsanordnungen 4 besitzen jeweils im Wesentlichen denselben Aufbau wie die zuerst beschriebenen. Die Rohre 2 weisen in den Teilrohrabschnitten 22 jedoch nur eine Durchgangsöffnung auf. Entsprechend weisen auch die Einsätze 7 jeweils nur eine Durchgangsöffnung auf. Wie der Fachmann erkennen kann, können nunmehr zwei Rohre 2 mit entsprechend eingesetzten Einsätzen 7 unter einem Winkel zueinander angeordnet und aneinander befestigt werden (sofern die Teilrohrabschnitte 22 eine ausreichende Länge aufweisen, die eine entsprechende winkelige Anordnung zulassen). Für eine im Wesentlichen senkrechte Anordnung der Rohre 2 zueinander könnten Teilrohrabschnitte 22 der Rohre so bemessen sein, dass eine Ausrichtung der jeweiligen Durchgangsöffnungen nur im rechten Winkel zueinander möglich ist. Bei der Ausführungsform gemäß Fig. 20 weisen die Einsätze 7 im Bereich der Anlageflächen um die Durchgangsöffnung herum eine Verzahnungsstruktur 95 auf. Diese wird an einem der Einsätze 7 durch Vertiefungen und an dem anderen Einsatz 7 durch komplementäre Vorsprünge gebildet. Diese sind derart im Kreis angeordnet, dass sie bestimmte Winkeleinstellungen der Einsätze 7 zueinander vorgeben. Beispielsweise können die Vertiefungen und die Vorsprünge so ausgebildet sein, dass ein ineinandergreifen jeweils bei einer Verdrehung um 5° möglich ist. Natürlich ist auch einen andere Verzahnung möglich. Eine solche Verzahnung kann die Winkeleinstellung zwischen den Rohren 2 zueinander vorgeben und beibehalten.

Bei der Ausgestaltung gemäß Fig. 21, weist eine Rohrverbindung 1 zur Verbindung zweier Rohre 2 mit Rohrverbindungsanordnungen 4 auf. Eine der Rohrverbindungsanordnungen 4 besitzt im Wesentlichen denselben Aufbau wie eine Rohrverbindungsanordnung 4 gemäß Fig. 19 oder 20. Die andere Rohrverbindungsanordnung 4 besitzt jedoch einen anderen Aufbau aus Rohr 2 und Einsatz 97. Hier weist das Rohr 2 einen solchen Ausschnitt auf, dass zwischen zwei Vollrohrabschnitten 20 ein Teilrohrabschnitt 22 gebildet wird. Der Teilrohrabschnitt 22 besitzt eine Länge, die wenigsten einem Außendurchmesser des anderen Rohrs 2 entspricht.

Der Einsatz 97 besitzt Endabschnitte 98, sowie einen zwischen den Endabschnitten liegenden Mittelabschnitt 99. Die Endabschnitte sind jeweils an die Innenkontur der Vollrohrabschnitte 20 des Rohrs 2 angepasst, und so dimensioniert, dass sie engpassend in den Vollrohrabschnitten 20 aufnehmbar sind. Bei einem kreisförmigen Rohr 2, wie es in den Figuren dargestellt ist, besitzt der Einsatz 97 im Bereich des Endabschnitte 98 somit eine im Wesentlichen kreisförmige Umfangskontur, wobei wiederum herstellungsbedingt größere Freiräume bzw. Aussparungen entstehen können. Der Mittelabschnitt 99 des Einsatzes 7 besitzt eine an die Innenkontur des Teilrohrabschnitts 22 angepasste gewölbte Kontur, sowie eine flache Anlageseite. Die Länge des Mittelabschnitts entspricht im Wesentlichen der Länge des Ausschnitts im Rohr 2.

Wie zu erkennen ist, ermöglicht eine solche Anordnung eine Verbindung eines Rohres mit einem anderen Rohr entlang einer beliebigen Stelle des Rohres und nicht nur an den Enden. Natürlich wäre es auch möglich, dass beide Verbindungsanordnungen 4 einen Teilrohrabschnitt 22 zwischen zwei Vollrohrabschnitten 20 und einen Einsatz 97 besitzen, um auf diese Weise zwei sich kreuzende Rohre 2 miteinander zu verbinden. Der Einsatz könnte wiederum eine Verzahnungsstruktur 95 gemäß Fig. 20 aufweisen, um eine winkelige Anordnung der Rohre 2 zueinander zu ermöglichen.

In den Figuren 10 bis 21 können dieselben Unterlegelemente 8 und Befestigungseinheiten, wie bei der ersten Ausführungsform eingesetzt werden, wobei gegebenenfalls die Dimensionen der Unterlegelemente und die Anzahl der Durchführöffnungen angepasst werden muss.

Die Erfindung wurde unter Bezugnahme auf konkrete Ausführungsformen und die Figuren näher erläutert, ohne auf die konkreten Ausführungsformen begrenzt zu sein. Insbesondere können die unterschiedlichen Ausführungsformen miteinander kombiniert werden, soweit sie kompatibel sind. Auch kann die Form der Einsätze unterschiedlich gewählt werden und es ist möglich, dass entsprechende Rohrverbindungsanordnungen an beiden Enden und/oder unterschiedlichen Positionen entlang eines Rohrs vorgesehen werden.

## Patentansprüche

1. Rohrverbindungsanordnung (4), die Folgendes aufweist:
ein Rohr (2), das wenigstens einen Ausschnitt aufweist, der so ausgebildet ist, dass an einen Vollrohrabschnitt (20) des Rohrs (2) ein Teilrohrabschnitt (22) angrenzt, wobei in dem Teilrohrabschnitt (22) wenigstens eine Durchführung (29) ausgebildet ist; **gekennzeichnet durch**:
einen Einsatz (7) mit einem ersten Abschnitt (30), der zur Aufnahme im Vollrohrabschnitt (20) des Rohrs (2) geeignet ist und eine an den Innenumfang des Vollrohrabschnitts (20) angepassten Außenkontur (33) aufweist, und einem zweiten Abschnitt (32), der zur Aufnahme im Teilrohrabschnitt (22) des Rohrs (2) geeignet ist und eine an die Innenkontur des Teilrohrabschnitts (22) angepasste gewölbte Kontur (34) und eine entgegengesetzte Anlageseite (35) aufweist, wobei in dem zweiten Abschnitt (32) wenigstens eine Durchführung (39) ausgebildet ist und wobei im eingesetzten Zustand des Einsatzes (7) die Anlageseite (35) des zweiten Abschnitts zum Ausschnitt des Teilrohrabschnitts (22) weist und die Durchführungen (29, 39) im Teilrohrabschnitt (22) und im zweiten Abschnitt (32) des Einsatzes (7) ausgerichtet sind, um das Hindurchführen eines Befestigungselements zu ermöglichen.

2. Rohrverbindungsanordnung (4) nach Anspruch 1, wobei der Einsatz (7) an einem freien Ende des zweiten Abschnitts (32) und/oder an dem Ende des ersten Abschnitts (30), der benachbart zum zweiten Abschnitt (32) liegt, einen Anlageflansch (42) zur Anlage gegen eine Stirnseitenkante (25) des Teilrohrabschnitts (22) aufweist, wobei der Anlageflansch (42) und die Stirnseitenkante (25) optional wenigstens eine komplementäre Ausrichtungskontur (27, 44) aufweisen.

3. Rohrverbindungsanordnung (4) nach einem der vorhergehenden Ansprüche, wobei wenigstens zwei Durchführungen (29, 39) im Teilrohrabschnitt (22) und im zweiten Abschnitt des Einsatzes (7) vorgesehen sind.

4. Rohrverbindungsanordnung (4) nach einem der vorhergehenden Ansprüche, wobei der Einsatz (7) ein Kunststoff-Gussteil, insbesondere ein Spritz- oder Druckgussteil ist.

5. Rohrverbindungsanordnung (4) nach einem der vorhergehenden Ansprüche, die ferner wenigstens ein Unterlegteil (8) aufweist, das eine an die Außenkontur des Teilrohrabschnitts (22) angepasste erste Seite (50) und eine entgegengesetzte zweite Seite (52) aufweist, wobei das Unterlegteil (8) wenigstens eine Durchführung (55) für ein Befestigungselement aufweist, und wobei die zweite Seite (52) im Bereich der Durchführung (55) eine flache Anlagefläche (56) für eine Anlagefläche eines Befestigungselements aufweist.

6. Rohrverbindungsanordnung (4) nach einem der vorhergehenden Ansprüche, wobei der Ausschnitt zur Bildung des Teilrohrabschnitts (22) derart am Ende des Rohrs (2) ausgebildet ist, dass der Teilrohrabschnitt (22) über den Vollrohrabschnitt (20) hinweg vorsteht, wobei optional eine Stirnseite des Vollrohrabschnitts (20) und/oder des Teilrohrabschnitts (22) eine Verzahnungsstruktur aufweist, und/oder wenigstens eine radial weisende Längskante des Teilrohrabschnitts (22) eine Verzahnungsstruktur aufweist.

7. Rohrverbindungsanordnung (4) nach Anspruch 6, wobei wenigstens eine der Verzahnungsstrukturen eine der folgenden Formen beschreibt; Sägezahn, Rechteck, Dreieck und Welle.

8. Rohrverbindungsanordnung (4) nach einem der Ansprüche 1 bis 5, wobei der Ausschnitt zur Bildung des Teilrohrabschnitts (22) zwischen zwei Vollrohrabschnitten (20) liegt, wobei der Einsatz (7) einen Dritten Abschnitt aufweist, der zur Aufnahme im Vollrohrabschnitt (20) des Rohrs (2) geeignet ist und eine an den Innenumfang des Vollrohrabschnitts (20) angepassten Außenkontur (33) aufweist, und wobei der zweite Abschnitt des Einsatzes (7) zwischen dem ersten und dem dritten Abschnitt liegt.

9. Rohrverbindungsanordnung (4), nach einem der vorhergehenden Ansprüche, wobei die Anlageseite (35) des Einsatzes (7) flach ist, und/oder wobei der Teilrohrabschnitt (22) im Wesentlichen ein Halbrohrabschnitt ist.

10. Rohrverbindungsanordnung (4) nach einem der Ansprüche 1 bis 7, wobei die Anlageseite (35) des Einsatzes (7) eine Verzahnungsstruktur aufweist.

11. Rohrverbindung (1) zweier Rohre (2), die für jedes Rohr (2) eine Rohrverbindungsanordnung (4) nach einem der vorhergehenden Ansprüche aufweist, wobei die Teilrohrabschnitte (22) der Rohre (2) mit eingesetzten Einsätzen (7) derart überlappend angeordnet sind, dass die Anlageseiten (35) der zweiten Abschnitte (32) der Einsätze (7) einander kontaktieren, und wobei wenigstens ein Befestigungselement (60) vorgesehen ist, dass sich durch die Durchführungen (29, 39) in beiden Teilrohrabschnitten (22) und den Einsätzen (7) erstrecken, um die Rohre (2) aneinander zu befestigen.

12. Rohrverbindung (1) nach Anspruch 11, wobei die Rohrverbindungsanordnungen (4) für jedes der Rohre (2) jeweils eine Verzahnungsstruktur aufweisen, wobei die Verzahnungsstrukturen der Rohrverbindungsanordnungen (4) zueinander komplementär sind, und wobei die Verzahnungsstrukturen bevorzugt jeweils in wenigstens einem der Folgenden ausgebildet ist: einer Stirnseite des Vollrohrabschnitts (20), einer Stirnseite des Teilrohrabschnitts (22), einer radial weisende Längskante des Teilrohrabschnitts (22) und der Anlageseite (35) des Einsatzes (7).

13. Rohrverbindungsanordnung (4) umfassend zwei Rohre (2), wobei jedes Rohr an wenigstens einem Befestigungsende einen Ausschnitt aufweist, der so ausgebildet ist, dass angrenzend an einen Vollrohrabschnitt (20) des jeweiligen Rohrs (2) ein Teilrohrabschnitt (22) gebildet ist, der mit dem Teilrohrabschnitt des anderen Rohres überlappend angeordnet werden kann, wobei in jedem Teilrohrabschnitt (22) wenigstens eine Durchführung (29) ausgebildet ist; **gekennzeichnet durch**: einen Einsatz (70) mit einem an den Innenumfang der Vollrohrabschnitte (20) angepassten Außenumfang und einer Länge die so gewählt ist, dass der Einsatz (70) länger ist, als die Länge eines jeweiligen Teilrohrabschnitts (22), sodass die entgegengesetzten Enden des Einsatzes (70) bei einer überlappenden Anordnung der Teilrohrabschnitte (22) der Rohre (2) in den Vollrohrabschnitten (20) beider Rohre (2) aufnehmbar sind, wobei der Einsatz (70) wenigstens eine Durchführung (79) aufweist, die mit den Durchführungen (29) in den Teilrohrabschnitten (22) ausrichtbar ist, wenn die entgegengesetzten Enden des Einsatzes (70) in den Vollrohrabschnitten (22) der Rohre (2) aufgenommen sind, um das Hindurchführen eines Befestigungselementes (60) durch die Teilrohrabschnitte (22) und den Einsatz (70) zu ermöglichen.

14. Rohrverbindungsanordnung (4) nach Anspruch 13, wobei der Einsatz (70) zwischen seinen entgegengesetzten Enden wenigstens, einen Anlageflansch (77) zur Anlage gegen eine Stirnseitenkante (25) eines Teilrohrabschnitts (22) aufweist.

15. Rohrverbindungsanordnung (4) nach Anspruch 13 oder 14, wobei der Anlageflansch (77) und die Stirnseitenkante (25) wenigstens eine komplementäre Ausrichtungskontur (27, 78) aufweisen.

## Claims

1. A tube connection arrangement (4), comprising:
a tube (2) having at least one cutout which is configured such that a partial-tube portion (22) adjoins a full-tube portion (20) of the tube (2),
wherein at least one through-opening (29) is formed in the partial-tube portion (22); and
an insert (7) having a first portion (30) which is suitable for being received in the full-tube portion (20) of the tube (2) and which has an external contour (33) adapted to the internal circumference of the full-tube portion (20), and a second portion (32) which is suitable for being received in the partial-tube portion (22) of the tube (2) and which has a curved contour (34), adapted to the internal contour of the partial-tube portion (22), and an opposite abutment side (35),
wherein at least one through-opening (39) is formed in the second portion (32), and wherein, in the inserted state of the insert (7), the abutment side (35) of the second portion is directed towards the cutout of the partial-tube portion (22) and the through-openings (29, 39) in the partial-tube portion (22) and in the second portion (32) of the insert (7) are aligned in order to enable a fastening element to be fed therethrough.

2. The tube connection arrangement (4) according to claim 1, wherein the insert (7) has, at a free end of the second portion (32) and/or at the end of the first portion (30) located adjacent to the second portion (32), an abutment flange (42) for abutment against a front edge (25) of the partial-tube portion (22), wherein the abutment flange (42) and the front edge (25) optionally have at least one complementary alignment contour (27, 44).

3. The tube connection arrangement (4) according to any of the preceding claims, wherein at least two through-openings (29, 39) are provided in the partial-tube portion (22) and in the second portion of the insert (7).

4. The tube connection arrangement (4) according to any of the preceding claims, wherein the insert (7) is a plastic cast component, in particular an injection-moulded or die-cast component.

5. The tube connection arrangement (4) according to any of the preceding claims, further comprising at least one washer component (8) which has a first side (50), adapted to the external contour of the partial-tube portion (22), and an opposite second side (52), wherein the washer component(8) has at least one through-opening (55) for a fastening element, and wherein the second side (52) has in the region of the through-opening (55) a flat abutment surface (56) for a abutment surface of a fastening element.

6. The tube connection arrangement (4) according to any of the preceding claims, wherein the cutout for forming the partial-tube portion (22) is formed at the end of the tube (2) in such a way that the partial-tube portion (22) protrudes beyond the full-tube portion (20), wherein optionally, a front end of the full-tube portion (20) and/or of the partial-tube portion (22) has a tooth structure, and/or wherein at least one radially directed longitudinal edge of the partial-tube portion (22) has a tooth structure.

7. The tube connection arrangement (4) according to claim 6, wherein at least one of the tooth structures describes one of the following shapes; saw-tooth, rectangle, triangle and wave.

8. The tube connection arrangement (4) according to any of claims 1 to 5, wherein the cutout for forming the partial-tube portion (22) is located between two full-tube portions (20), wherein the insert (7) has a third portion which is suitable for being received in the full-tube portion (20) of the tube (2) and which has an external contour (33) adapted to the internal circumference of the full-tube portion (20), and wherein the second portion of the insert (7) is located between the first and the third portion.

9. The tube connection arrangement (4) according to any of the preceding claims, wherein the abutment side (35) of the insert (7) is flat, and/or wherein the partial-tube portion (22) is substantially a half-tube portion.

10. The tube connection arrangement (4) according to any of claims 1 to 7, wherein the abutment side (35) of the insert (7) has a tooth structure.

11. A tube connection (1) of two tubes (2), which has for each tube (2) a tube connection arrangement (4) according to any of the preceding claims, wherein the partial-tube portions (22) of the tubes (2) with inserted inserts (7) are arranged in an overlapping manner in such a way that the abutment sides (35) of the second portions (32) of the inserts (7) make contact with one another, and wherein at least one fastening element (60) is provided which extends through the through-openings (29, 39) in the two partial-tube portions (22) and in the inserts (7) in order to fasten the tubes (2) to one another.

12. The tube connection (1) according to claim 11, wherein the tube connection arrangements (4) for each of the tubes (2) each have a tooth structure, wherein the tooth structures of the tube connection arrangements (4) are complementary to one another, and wherein the tooth structures preferably are preferably formed in at least one of the following: a front end of the full-tube portion (20), a front end of the partial-tube portion (22), a radially directed longitudinal edge of the partial-tube portion (22) and the abutment side (35) of the insert (7).

13. A tube connection arrangement (4) comprising two tubes (2), and having for each of the tubes, on at least one fastening end, a cutout which is configured such that, adjoining a full-tube portion (20) of the respective tube (2), a partial-tube portion (22) is formed which can be arranged in a manner overlapping the partial-tube portion of the other tube, wherein at least one through-opening (29) is formed in each partial-tube portion (22); tube connection arrangement (4) being **characterized by**:
an insert (70) having an external circumference adapted to the internal circumference of the full-tube portions (22) and a length which is selected such that the insert (70) is longer than the length of a respective partial-tube portion (22), so that the opposite ends of the insert (70) can be received in the full-tube portions (20) of the two tubes (2) when the partial-tube portions (22) of the tubes (2) are arranged in an overlapping manner,
wherein the insert (70) has at least one through-opening (79) which can be aligned with the through-openings (29) in the partial-tube portions (22) when the opposite ends of the insert (70) are received in the full-tube portions (22) of the tubes (2), in order to enable a fastening element (60) to be fed through the partial-tube portions (22) and the insert (70).

14. The tube connection arrangement (4) according to claim 13, wherein the insert (70) has, between its opposite ends, at least one abutment flange (77) for abutment against a front edge (25) of a partial-tube portion (22).

15. The tube connection arrangement (4) according to claim 13 or 14, wherein the abutment flange (77) and the front edge (25) have at least one complementary alignment contour (27, 78).

## Revendications

1. Agencement de connexion de tubes (4), comprenant :
un tube (2) comportant au moins une découpe qui est agencée de telle sorte qu'une portion de tube partiel (22) rejoint une portion de tube complet (20) du tube (2), au moins une ouverture traversante (29) étant formée dans la portion de tube partiel (22) ; et
un insert (7) comportant une première portion (30) qui est appropriée pour être reçue dans la portion de tube complet (20) du tube (2) et qui a un contour externe (33) adapté à la circonférence interne de la portion de tube complet (20), et une deuxième portion (32) qui est appropriée pour être reçue dans la portion de tube partiel (22) du tube (2) et qui a un contour courbe (34), adapté au contour interne de la portion de tube partiel (22), et un côté de butée opposé (35),
dans lequel au moins une ouverture traversante (39) est formée dans la deuxième portion (32), et dans lequel, dans l'état inséré de l'insert (7), le côté de butée (35) de la deuxième portion est orienté vers la découpe de la portion de tube partiel (22) et les ouvertures traversantes (29, 39) dans la portion de tube partiel (22) et dans la deuxième portion (32) de l'insert (7) sont alignées afin de permettre qu'un élément de fixation soit introduit à travers.

2. Agencement de connexion de tubes (4) selon la revendication 1, dans lequel l'insert (7) comporte, au niveau d'une extrémité libre de la deuxième portion (32) et/ou au niveau de l'extrémité de la première portion (30) située adjacente à la deuxième portion (32), un rebord de butée (42) pour buter contre un bord avant (25) de la portion de tube partiel (22), dans lequel le rebord de butée (42) et le bord avant (25) ont optionnellement au moins un contour d'alignement complémentaire (27, 44).

3. Agencement de connexion de tubes (4) selon l'une quelconque des revendications précédentes, dans lequel au moins deux ouvertures traversantes (29, 39) sont prévues dans la portion de tube partiel (22) et dans la deuxième portion de l'insert (7).

4. Agencement de connexion de tubes (4) selon l'une quelconque des revendications précédentes, dans lequel l'insert (7) est un composant moulé en plastique, en particulier un composant moulé par injection ou moulé sous-pression.

5. Agencement de connexion de tubes (4) selon l'une quelconque des revendications précédentes, comprenant en outre au moins un composant formant rondelle (8) qui comporte un premier côté (50), adapté au contour externe de la portion de tube partiel (22), et un deuxième côté opposé (52), le composant formant rondelle (8) comportant au moins une ouverture traversante (55) pour un élément de fixation, et le deuxième côté (52) comportant dans la région de l'ouverture traversante (55) une surface de butée plate (56) pour une surface de butée d'un élément de fixation.

6. Agencement de connexion de tubes (4) selon l'une quelconque des revendications précédentes, dans lequel la découpe destinée à former la portion de tube partiel (22) est formée au niveau de l'extrémité du tube (2) de telle manière que la portion de tube partiel (22) est saillante au-delà de la portion de tube complet (20), dans lequel optionnellement, une extrémité avant de la portion de tube complet (20) et/ou de la portion de tube partiel (22) comporte une structure de dent, et/ou dans lequel au moins un bord longitudinal orienté radialement de la portion de tube partiel (22) comporte une structure de dent.

7. Agencement de connexion de tubes (4) selon la revendication 6, dans lequel au moins l'une des structures de dent prend l'une des formes suivantes : une dent de scie, un rectangle, un triangle ou une onde.

8. Agencement de connexion de tubes (4) selon l'une quelconque des revendications 1 à 5, dans lequel la découpe pour former la portion de tube partiel (22) est située entre deux portions de tube complet (20), dans lequel l'insert (7) comporte une troisième portion qui est appropriée pour être reçue dans la portion de tube complet (20) du tube (2) et qui a un contour externe (33) adapté à la circonférence interne de la portion de tube complet (20), et dans lequel la deuxième portion de l'insert (7) est située entre les première et troisième portions.

9. Agencement de connexion de tubes (4) selon l'une quelconque des revendications précédentes, dans lequel le côté de butée (35) de l'insert (7) est plat, et/ou dans lequel la portion de tube partiel (22) est sensiblement une portion en demi-tube.

10. Agencement de connexion de tubes (4) selon l'une quelconque des revendications 1 à 7, dans lequel le côté de butée (35) de l'insert (7) comporte une structure de dent.

11. Connexion de tubes (1) de deux tubes (2), qui comporte pour chaque tube (2) un agencement de connexion de tubes (4) selon l'une quelconque des revendications précédentes, dans laquelle les portions de tube partiel (22) des tubes (2) avec des inserts insérés (7) sont agencées en chevauchement de telle manière que les côtés de butée (35) des deuxièmes portions (32) des inserts (7) font contact entre eux, et dans laquelle au moins un élément de fixation (60) est prévu s'étendant à travers les ouvertures traversantes (29, 39) dans les deux portions de tube partiel (22) et dans les inserts (7) afin de fixer les tubes (2) entre eux.

12. Connexion de tubes (1) selon la revendication 11, dans laquelle les agencements de connexion de tubes (4) pour chacun des tubes (2) comportent chacun une structure de dent, dans laquelle les structures de dent des agencements de connexion de tubes (4) sont complémentaires entre elles, et dans laquelle les structures de dent sont de préférence formées dans au moins l'un des emplacements suivants : une extrémité avant de la portion de tube complet (20), une extrémité avant de la portion de tube partiel (22), un bord longitudinal orienté radialement de la portion de tube partiel (22) ou le côté de butée (35) de l'insert (7) .

13. Agencement de connexion de tubes (4) comprenant deux tubes (2), et comportant pour chacun des tubes, sur au moins une extrémité de fixation, une découpe qui est agencée de telle sorte que, rejoignant une portion de tube complet (20) du tube respectif (2), une portion de tube partiel (22) est formée pouvant être agencée en chevauchement avec la portion de tube partiel de l'autre tube, dans lequel au moins une ouverture traversante (29) est formée dans chaque portion de tube partiel (22) ; l'agencement de connexion de tubes (4) étant **caractérisé par** :
un insert (70) ayant une circonférence externe adaptée à la circonférence interne des portions de tube complet (22) et une longueur qui est sélectionnée de telle sorte que l'insert (70) soit plus long que la longueur d'une portion de tube partiel respective (22), de sorte que les extrémités opposées de l'insert (70) peuvent être reçues dans les portions de tube complet (20) des deux tubes (2) lorsque les portions de tube partiel (22) des tubes (2) sont agencées en chevauchement,
dans lequel l'insert (70) comporte au moins une ouverture traversante (79) qui peut être alignée avec les ouvertures traversantes (29) dans les portions de tube partiel (22) lorsque les extrémités opposées de l'insert (70) sont reçues dans les portions de tube complet (22) des tubes (2), afin de permettre qu'un élément de fixation (60) soit introduit à travers les portions de tube partiel (22) et l'insert (70).

14. Agencement de connexion de tubes (4) selon la revendication 13, dans lequel l'insert (70) comporte, entre ses extrémités opposées, au moins un rebord de butée (77) pour buter contre un bord avant (25) d'une portion de tube partiel (22).

15. Agencement de connexion de tubes (4) selon la revendication 13 ou 14, dans lequel le rebord de butée (77) et le bord avant (25) ont au moins un contour d'alignement complémentaire (27, 78).
